# EUROPÄISCHE PATENTANMELDUNG

(11) **EP 1 277 789 A2**
(43) Veröffentlichungstag der Anmeldung: **22.01.2003**
(21) Anmeldenummer: 02090241.7
(22) Anmeldetag: 10.07.2002
(51) Int. Cl.: C08J 11/12, C10G 1/10, C22B 1/00, C10B 53/00, B09B 3/00

(54) **Vorrichtung und Verfahren zur Aufbereitung von Metall enthaltenden organischen Abfallstoffen**

(30) Priorität: 19.07.2001 DE 10136619
(71) Anmelder: ABF Entwicklungsbetrieb für innovatives Reifenrecycling GmbH, 15890 Eisenhüttenstadt (DE)
(72) Erfinder: Fehrmann, Wolfgang, 16321 Bernau (DE); Stockhammer, Thomas, 4020 Linz (AT); Römer, Siegfried, 16348 Gross-Schönebeck (DE); Löffler, Martin, 10178 Berlin (DE)
(74) Vertreter: Eisenführ, Speiser & Partner

(57) **Zusammenfassung**

Vorrichtung zur Aufbereitung von hochtemperaturbeständige Bestandteile (5.1), insbesondere hochtemperaturbeständige Metallteile, enthaltenden organischen Abfallstoffen mit einem einen Hochtemperaturbereich (3) umfassenden Reaktor (2), einem darin angeordneten Depolymerisationsbad (4) zur thermischen Depolymerisation der organischen Bestandteile der Abfallstoffe und mit einer im Hochtemperaturbereich (3) des Reaktors (2) angeordneten Abscheidungseinrichtung (10) zur Abscheidung wenigstens eines Teils der hochtemperaturbeständigen Bestandteile (5.1) aus dem Austragsmaterialstrom (5) des Depolymerisationsbades (4), wobei die Abscheidungseinrichtung (10) eine erste Magneteinrichtung (11, 12; 12') zur Abscheidung magnetischer Bestandteile (5.1) umfasst. Entsprechendes Verfahren zur Aufbereitung organischer Abfallstoffe.

## Beschreibung

Die vorliegende Erfindung betrifft eine Vorrichtung zur Aufbereitung von hochtemperaturbeständige Bestandteile, insbesondere hochtemperaturbeständige Metallteile, enthaltenden organischen Abfallstoffen mit einem einen Hochtemperaturbereich umfassenden Reaktor, einem darin angeordneten Depolymerisationsbad zur thermischen Depolymerisation der organischen Bestandteile der Abfallstoffe und mit einer im Hochtemperaturbereich des Reaktors angeordneten Abscheidungseinrichtung zur Abscheidung wenigstens eines Teils der hochtemperaturbeständigen Bestandteile aus dem Austragsmaterialstrom des Depolymerisationsbades. Sie betrifft weiterhin ein entsprechendes Verfahren zur Aufbereitung solcher Abfallstoffe.

Eine gattungsgemäße Vorrichtung ist beispielsweise aus der US 3,770,419 bekannt. Die dort beschriebene Vorrichtung weist in einem Reaktor ein Depolymerisationsbad aus einem geschmolzenen Metall auf, von dessen Oberfläche die bei der Depolymerisation freigesetzten bzw. entstehenden Feststoffe, wie beispielsweise in den Abfallstoffen enthaltene Metallteile höherer Schmelztemperatur bzw. Ruß, durch rotierende Scheiben abgezogen werden. Die Metallteile und der Ruß werden zusammen aus dem Hochtemperaturbereich des Reaktors weggeführt und zu einem späteren Zeitpunkt voneinander getrennt.

Die bekannte Vorrichtung weist den Nachteil auf, dass die Metallteile erst relativ spät, nämlich nach dem Entfernen aus dem Hochtemperaturbereich des Reaktors sowie nach einem Abkühlvorgang von dem Ruß getrennt werden. Solche Metallteile, beispielsweise die bei der Depolymerisation freigesetzten Stahlarmierungen von Altreifen, tendieren jedoch dazu, sich untereinander oder an Vorsprüngen, Hinterscheidungen etc. auf ihrem Transportweg zu verhaken. Auf Grund des gemeinsamen Transportes mit dem Ruß sind die Metallteile relativ starken Bewegungen unterworfen, sodass es zum teilweisen oder sogar vollständigen Blockieren der Transportwege durch verhakte und ineinander verknäuelte Metallteile kommen kann.

Ein weiterer Nachteil liegt darin, dass sich die Transporteinrichtungen zum gemeinsamen Wegführen von Ruß und Metallteilen aufgrund der deutlich unterschiedlichen Beschaffenheit dieser Materialien relativ aufwändig gestalten.

Der vorliegenden Erfindung liegt daher die Aufgabe zu Grunde, eine Vorrichtung sowie ein Verfahren der eingangs genannten Art zur Verfügung zu stellen, welche die oben genannten Nachteile nicht oder zumindest in geringerem Maße aufweisen und insbesondere bei einfachem Aufbau einen möglichst störungsfreien Betrieb sicherstellen.

Die vorliegende Erfindung löst diese Aufgabe ausgehend von einer Vorrichtung gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 17 durch die im kennzeichnenden Teil des Anspruchs 17 angegebenen Merkmale.

Der Erfindung liegt die technische Lehre zu Grunde, dass man mit besonders einfachen Mitteln eine zuverlässig arbeitende Aufbereitung erreicht, wenn ein möglichst großer Anteil der festen Bestandteile der Abfallstoffe, die zum Blockieren bzw. Verstopfen der Abfuhrwege und -einrichtungen neigen, möglichst frühzeitig von den übrigen auszutragenden festen Reaktionsprodukten abgeschieden wird. Diese wird erfindungsgemäß dadurch erreicht, dass die Abscheidungseinrichtung eine erste Magneteinrichtung zur Abscheidung magnetischer Bestandteile umfasst.

Es hat sich überraschend gezeigt, dass es möglich ist, im Hochtemperaturbereich des Reaktors eine Magneteinrichtung, insbesondere eine Elektromagneteinrichtung, anzuordnen, die es ermöglicht, magnetische Bestandteile der Abfallstoffe, wie beispielsweise die Stahlarmierungen von Altreifen, welche in der Regel den Großteil der zum Blockieren bzw. Verstopfen der Abfuhrwege und -einrichtungen neigenden Bestandteile der Abfallstoffe darstellen, sehr früh von den übrigen festen Reaktionsprodukten zu trennen. Dadurch ist nicht nur ein reibungsloserer Betrieb möglich, sondern es können zudem die einzelnen Abfuhreinrichtungen für die magnetischen Bestandteile und die übrigen festen Reaktionsprodukte speziell auf das jeweils abzuführende Gut ausgelegt werden. Wegen der stark unterschiedlichen Beschaffenheit der magnetischen Bestandteile und der übrigen festen Reaktionsprodukte kann die jeweilige Abfuhreinrichtung demgemäss entsprechend einfacher gestaltet sein, da sie nur zum Abführen eines Gutes mit relativ einheitlicher Konsistenz ausgelegt sein muss.

Anders als bei der Abscheidung durch Rüttelsiebeinrichtungen oder dergleichen ermöglicht der Einsatz der Magneteinrichtung eine Abscheidung der magnetischen Bestandteile, ohne dass es zu starken Bewegungen der abgeschiedenen magnetischen Bauteile kommt, wodurch sich diese wiederum nicht untereinander verhaken beziehungsweise verknäueln können. Zudem kann die Magneteinrichtung einfach so gestaltet werden, dass es zu keinem Verhaken der magnetischen Bestandteile an der Magneteinrichtung kommt.

Die Magneteinrichtung kann als Permanentmagnet ausgebildet sein. Bevorzugt ist sie doch als Elektromagneteinrichtung ausgebildet, da hiermit ein besonders einfaches Entfernen der magnetischen Bestandteile von der Magneteinrichtung möglich ist.

Das Entfernen der magnetischen Bestandteile von der Elektromagneteinrichtung kann in beliebiger Weise erfolgen. So kann beispielsweise ein Abstreifer oder dergleichen vorgesehen sein, der von Zeit zu Zeit, beispielsweise in festen zeitlichen Abständen, die anhaftenden magnetischen Bestandteile von der Magneteinrichtung abstreift. Bevorzugt umfasst die erste Elektromagneteinrichtung jedoch eine zum zeitweisen Abschalten der Magnetwirkung ausgebildete Steuereinrichtung, sodass kein derartiger Abstreifer nötig ist, sondern die magnetischen Bestandteile schon auf Grund der Schwerkraft von der Magneteinrichtung abfallen.

Die Abscheidungseinrichtung weist dann bevorzugt eine der ersten Elektromagneteinrichtung zumindest zeitweise zugeordnete Abfuhreinrichtung zum Wegführen der von der ersten Elektromagneteinrichtung bei abgeschalteter Magnetwirkung freigegebenen magnetischen Bestandteile auf. Die Abfuhreinrichtung kann der Elektromagneteinrichtung in beliebiger Weise räumlich zugeordnet sein. Bevorzugt ist sie unterhalb des die magnetischen Bestandteile tragenden Bereichs der Elektromagneteinrichtung angeordnet, sodass sich die von der Elektromagneteinrichtung freigegebenen magnetischen Bestandteile einfach infolge der Schwerkraft auf die Abfuhreinrichtung zu bewegen, im einfachsten Fall auf diese herab fallen.

Die zeitweise Zuordnung kann dann beispielsweise dadurch erfolgen, dass die Abfuhreinrichtung von Zeit zu Zeit unter den die magnetischen Bestandteile tragenden Bereich der Elektromagneteinrichtung verfahren wird, um dort die freigegebenen magnetischen Bestandteile aufzunehmen. Ebenso ist es möglich, die Abfuhreinrichtung der Elektromagneteinrichtung feststehend zuzuordnen, aber nur zeitweise den Weg für die von der Elektromagneteinrichtung freigegebenen magnetischen Bestandteile zur Abfuhreinrichtung freizugeben.

Um ein zuverlässiges Freigeben der magnetischen Bestandteile durch die Elektromagneteinrichtung sicherzustellen, ist bei bevorzugten Varianten der erfindungsgemäßen Vorrichtung vorgesehen, dass die Steuereinrichtung zum zeitweisen Entmagnetisieren der ersten Elektromagneteinrichtung ausgebildet ist. Hierzu kann die Elektromagneteinrichtung von Zeit zu Zeit beispielsweise mit entsprechenden Wechselstromsequenzen beaufschlagt werden. Dies stellt sicher, dass es nicht mit der Zeit zu einer permanenten Magnetisierung der entsprechenden Teile der Elektromagneteinrichtung kommt, welche verhindern würde, dass sich die magnetischen Bestandteile von der Elektromagneteinrichtung in der gewünschten Weise lösen.

Bei bevorzugten Varianten der erfindungsgemäßen Vorrichtung ist vorgesehen, dass die erste Elektromagneteinrichtung eine die magnetischen Bestandteile aufnehmende Elektromagneteinheit umfasst und die Abfuhreinrichtung eine zumindest zeitweise unterhalb der Elektromagneteinheit angeordnete erste Fördereinheit aufweist. Diese erste Fördereinheit dient zum Wegführen der von der ersten Elektromagneteinrichtung bei abgeschalteter Magnetwirkung freigegebenen magnetischen Bestandteile.

Die zeitweise räumliche Zuordnung zwischen der ersten Fördereinheit und der Elektromagneteinheit kann wie oben bereits erwähnt dadurch erfolgen, dass die Fördereinheit von Zeit zu Zeit unter die Elektromagneteinheit verfahren, beispielsweise verschwenkt werden, um dort die freigegebenen magnetischen Bestandteile aufzunehmen. Bevorzugt ist die Fördereinheit der Elektromagneteinheit dauerhaft zugeordnet, es wird jedoch nur zeitweise der Weg für die von der Elektromagneteinheit freigegebenen magnetischen Bestandteile zur ersten Fördereinheit freigegeben.

Die erste Fördereinheit kann beliebig gestaltet sein. Sie kann angetrieben sein, wie dies beispielsweise bei einem Förderband oder dergleichen der Fall ist. Bevorzugt nutzt sie jedoch die Schwerkraft zum Abtransport der magnetischen Bestandteile. Vorzugsweise umfasst die erste Fördereinheit hierzu eine einfache Rutsche oder dergleichen.

Wie bereits oben erwähnt, kann die Abfuhreinrichtung der Elektromagneteinrichtung feststehend zugeordnet sein, aber nur zeitweise der Weg für die von der Elektromagneteinrichtung freigegebenen magnetischen Bestandteile zur Abfuhreinrichtung freigegeben werden. Bevorzugte Varianten der erfindungsgemäßen Vorrichtung zeichnen sich hierbei dadurch aus, dass die Abscheidungseinrichtung eine der ersten Elektromagneteinrichtung zugeordnete zweite Fördereinheit zum Vorbeiführen des Austragsmaterials an der ersten Elektromagneteinrichtung umfasst. Zum Wegführen der von der ersten Elektromagneteinrichtung bei abgeschalteter Magnetwirkung freigegebenen magnetischen Bestandteile weist die zweite Fördereinheit dann wenigstens eine der ersten Elektromagneteinrichtung zeitweise zugeordnete Durchlasseinrichtung auf. Durch diese Durchlasseinrichtung hindurch können dann die von der Elektromagneteinrichtung freigegebenen magnetischen Bestandteile zur Abfuhreinrichtung gelangen, beispielsweise fallen.

Es versteht sich, dass hierbei dann die Steuereinrichtung der Elektromagneteinrichtung derart mit der zweiten Fördereinheit verbunden ist, dass das Abschalten der Magnetwirkung der Elektromagneteinrichtung mit der Zuordnung der Durchlasseinrichtung zur Elektromagneteinrichtung synchronisiert ist. Mit anderen Worten wird die Magnetwirkung nur dann abgeschaltet, wenn die Durchlasseinrichtung der Elektromagneteinrichtung derart zugeordnet ist, dass die freigegebenen magnetischen Bestandteile die Durchlasseinrichtung auch passieren können.

Die zweite Fördereinheit kann wiederum in beliebiger bekannter Weise gestaltet sein. So kann sie beispielsweise von einem Förderband oder dergleichen gebildet sein, welches eine oder mehrere entsprechende Durchgangsöffnungen aufweist, durch die hindurch die von der Elektromagneteinrichtung freigegebenen magnetischen Bestandteile fallen können.

Bei vorteilhaften, weil einfach aufgebauten Varianten der erfindungsgemäßen Vorrichtung umfasst die zweite Fördereinheit ein scheibenförmiges, um eine im wesentlichen senkrecht zu seiner Ebene verlaufende Achse drehbares Förderelement mit einer Durchlasseinrichtung in Form einer Ausnehmung. Bei jeder Umdrehung des Förderelements passiert die Ausnehmung die Elektromagneteinrichtung einmal. Zu diesem Zeitpunkt schaltet die Steuereinrichtung dann die Magnetwirkung ab, sodass die freigegebenen magnetischen Bestandteile durch die Ausnehmung hindurch zur ersten Fördereinheit gelangen können.

Bei besonders einfach gestalteten Varianten der erfindungsgemäßen Vorrichtung ist das Förderelement kreisscheibenförmig mit einer im wesentlichen kreissektorförmigen Durchlassöffnung ausgebildet.

Bei bevorzugten Varianten der erfindungsgemäßen Vorrichtung werden an dem Austragsmaterial anhaftende Tropfen oder Partikel des Depolymerisationsbades abgeschüttelt, indem das Austragsmaterial, beispielsweise bei seiner Zufuhr zur Abscheidungseinrichtung, eine bestimmte Fallhöhe überwinden muss. Dieses einfache Abschütteln an dem Austragsmaterial anhaftender Tropfen bzw. Partikel ist dank der Anordnung der Abscheidungseinrichtung im Hochtemperaturbereich des Reaktors möglich.

Vorzugsweise ist vorgesehen, dass die Abscheidungseinrichtung hierzu eine der ersten Magneteinrichtung zugeordnete zweite Fördereinheit zum Vorbeiführen des Austragsmaterials an der ersten Magneteinrichtung aufweist und eine Zufuhreinrichtung zum Zuführen des Austragsmaterials vom Depolymerisationsbad vorgesehen ist. Diese Zufuhreinrichtung ist der zweiten Fördereinheit derart zugeordnet, dass eine ausreichende Fallhöhe zum Abschütteln an dem Austragsmaterial, insbesondere an den magnetischen Bestandteilen, anhaftender Tropfen oder Partikel des Depolymerisationsbades bei Auftreffen der Bestandteile auf die zweite Fördereinheit gegeben ist.

Bei vorteilhaften Varianten der erfindungsgemäßen Vorrichtung ist schon die zweite Fördereinheit zum Abführen mit dem Austragsmaterial mitgeführter Tropfen oder Partikel des Depolymerisationsbades ausgebildet. Vorzugsweise weist die zweite Fördereinheit hierzu einen rinnenartig ausgebildeten Abschnitt zum Abführen mit dem Austragsmaterial mitgeführter Tropfen oder Partikel des Depolymerisationsbades auf.

Bei günstigen Weiterbildungen ist der Abscheidungseinrichtung eine Badrückführungseinrichtung zum Rückführen mit dem Austragsmaterialstrom mitgeführter Tropfen oder Partikel des Depolymerisationsbades zugeordnet, sodass sich das Rückführen besonders einfach gestaltet. Die Badrückführungseinrichtung umfasst dabei wegen der besonders einfachen Gestaltung vorzugsweise ein nach Art eines Überlaufs ausgebildetes Rückführungselement.

Bei bevorzugten Varianten der erfindungsgemäßen Vorrichtung ist diese zur mehrstufigen Abscheidung magnetischer Bestandteile ausgebildet. Mit anderen Worten sind mehrere Stufen zu Abscheidung magnetischer Bestandteile aus dem Austragsmaterialstrom vorgesehen, um sicherzustellen, dass in einer vorhergehenden Stufe nicht abgeschiedene magnetische Bestandteile dann in der oder einer der nachfolgenden Stufen erfasst werden.

Die vorliegende Erfindung betrifft weiterhin eine Abscheidungseinrichtung für eine erfindungsgemäße Vorrichtung. Die Abscheidungseinrichtung weist dabei die soeben dargelegten Merkmale auf, sodass bezüglich dieser Merkmale und der damit erzielbaren Vorteile auf die vorstehende Beschreibung verwiesen wird.

Die vorliegende Erfindung betrifft weiterhin ein Verfahren zur Aufbereitung von hochtemperaturbeständige Bestandteile, insbesondere hochtemperaturbeständige Metallteile, enthaltenden organischen Abfallstoffen, bei dem in einem Depolymerisationsbad eines Reaktors eine thermische Depolymerisation der organischen Bestandteile der Abfallstoffe erfolgt und im Hochtemperaturbereich des Reaktors wenigstens ein Teil der hochtemperaturbeständigen Werkstoffe aus dem Austragsmaterialstrom des Depolymerisationsbades abgeschieden wird. Erfindungsgemäß erfolgt dabei eine frühzeitige Abscheidung magnetischer Bestandteile im Hochtemperaturbereich des Reaktors durch Magnetwirkung einer Magneteinrichtung.

Bevorzugt wird die Magnetwirkung zeitweise abgeschaltet, um die bei abgeschalteter Magnetwirkung von der Magneteinrichtung freigegebenen magnetischen Bestandteile abführen zu können.

Die Magneteinrichtung kann, beispielsweise durch eine entsprechende Antriebseinrichtung, an dem Austragsmaterial vorbei geführt werden. Auf Grund der einfacheren Realisierung wird jedoch bevorzugt das Austragsmaterial zur Abscheidung der magnetischen Bestandteile an der Magneteinrichtung vorbeigeführt.

Wie bereits oben erwähnt werden bei bevorzugten Varianten des erfindungsgemäßen Verfahrens mit dem Austragsmaterial mitgeführte Tropfen oder Partikel des Depolymerisationsbades im Hochtemperaturbereich des Reaktors von dem Austragsmaterial abgeschieden und in das Depolymerisationsbad zurückgeführt, da hiermit eine besonders einfache Rückführung möglich ist.

Die Abscheidung der Tropfen bzw. Partikel erfolgt bei bevorzugten Varianten des erfindungsgemäßen Verfahrens, indem zum Abschütteln an dem Austragsmaterial, insbesondere an den magnetischen Bestandteilen, anhaftender Tropfen oder Partikel des Depolymerisationsbades das bewegte Austragsmaterial im Hochtemperaturbereich des Reaktors einer zum Abschütteln zumindest eines Großteils der anhaftenden Tropfen oder Partikel ausreichenden Verzögerung unterworfen wird. Diese Verzögerung wird im einfachsten Fall dadurch erzielt, dass man das Austragsmaterial mit einer bestimmten Fallhöhe auf ein Hindernis fallen lässt.

Es ist der ebenso möglich, diese Verzögerung auf andere Weise zu erzielen, ohne dass es zu einem freien Fall des Austragsmaterials kommen müsste. So kann man das Austragsmaterial beispielsweise auch über eine entsprechend steile Bahn gegen ein Hindernis rutschen lassen.

Ebenso lassen sich zur Abscheidung der Tropfen bzw. Partikel von Austragsmaterial aber natürlich in bekannter Weise auch Zentrifugalkräfte nutzen.

Weitere vorteilhafte Ausgestaltungen der Erfindung ergeben sich aus den Unteransprüchen bzw. aus der nachfolgenden Beschreibung bevorzugter Ausführungsbeispiele, welche auf die beigefügten Zeichnungen Bezug nimmt. Es zeigen:
- Figur 1: einen schematischen Teilschnitt durch ein bevorzugtes Ausführungsbeispiel der erfindungsgemäßen Vorrichtung;
- Figur 2: eine schematische perspektivische Ansicht eines Teils der Vorrichtung aus Figur 1;
- Figur 3: eine schematische perspektivische Ansicht eines weiteren bevorzugten Ausführungsbeispiels der erfindungsgemäßen Vorrichtung.

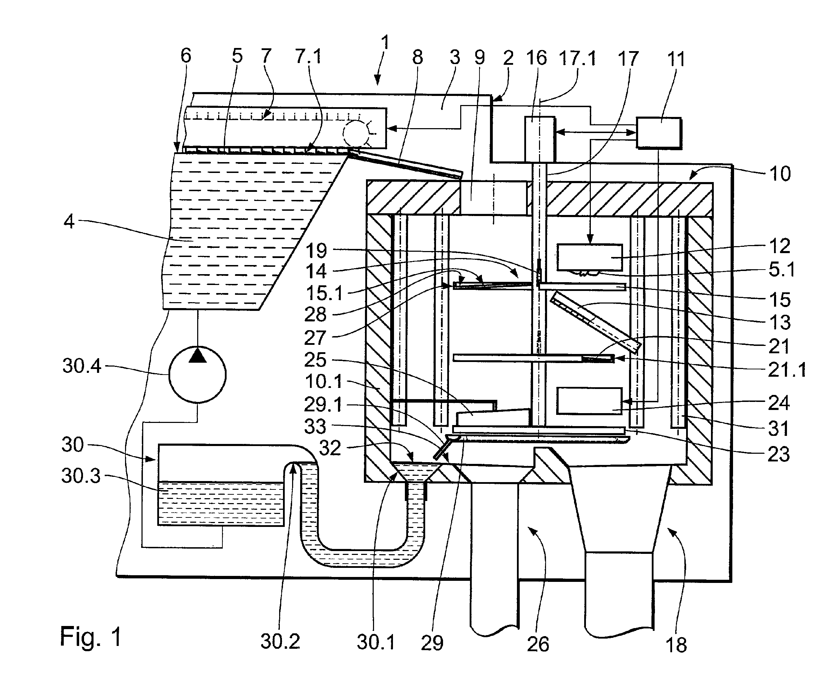

Figur 1 zeigt einen schematischen Teilschnitt durch eine erfindungsgemäße Vorrichtung 1 zur Aufbereitung von organischen Abfallstoffen, beispielsweise von Altreifen. Die Vorrichtung 1 umfasst einen Reaktor 2 in dessen Hochtemperaturbereich 3 ein Depolymerisationsbad 4 angeordnet ist.

Das Depolymerisationsbad 4 besteht aus der Schmelze eines Wärmeträgers. Im vorliegenden Beispiel handelt es sich um eine Bleischmelze, es lassen sich jedoch auch Schmelzen anderer Wärmeträger, beispielsweise anderer Metalle bzw. Metalllegierungen oder Salzschmelzen einsetzen.

Das Depolymerisationsbad 4 dient zur thermischen Depolymerisation der ihm über - nicht dargestellte - Zuführmittel zugeführten organischen Abfallstoffe. Bei dieser Depolymerisation entstehen neben flüchtigen Reaktionsprodukten, die über - nicht dargestellte - Abzugseinrichtungen aus dem Reaktor 2 abgeführt werden, auch feststoffförmige Reaktionsprodukte, welche den Hauptanteil des Austragsmaterials 5 des Depolymerisationsbades 4 bilden.

Bei diesen feststoffförmigen Reaktionsprodukten handelt es sich zum einen um bei der thermischen Depolymerisation entstehenden Ruß sowie um hochtemperaturbeständige Bestandteile der Abfallstoffe, die bei der Depolymerisation aus dem Verbund gelöst werden. Bei diesen hochtemperaturbeständigen Bestandteilen kann es sich beispielsweise um Armierungen aus Stahl oder Bauteile aus anderen Werkstoffen handeln, deren Schmelzpunkt oberhalb der Temperatur des Badmaterials liegt.

Die genannten Feststoffe 5 schwimmen auf Grund ihrer gegenüber dem Depolymerisationsbad 4 geringeren Dichte auf der Oberfläche 6 des Depolymerisationsbades 4 auf und werden von dieser Oberfläche 6 über Fördermittel 7 mit Abstreifern 7.1 in die in die um den abgeführt. Über eine Zufuhreinrichtung in Form einer Rutsche 8 gelangen die Feststoffe durch eine Öffnung 9 dann in eine Abscheidungseinrichtung in Form eines Separators 10, der im Hochtemperaturbereich 3 des Reaktors 2 angeordnet ist.

Der Separator 10 umfasst eine erste Magneteinrichtung mit einem durch eine Steuereinrichtung 11 betätigbaren ersten Elektromagneten 12, an dem das dem Separator 10 zugeführte Austragsmaterial des Depolymerisationsbades 4 vorbeigeführt wird. Bei eingeschalteter Magnetwirkung des Elektromagneten 12 werden die magnetischen Bestandteile der organischen Abfallstoffe, wie beispielsweise Stahlarmierungen von Altreifen oder dergleichen, aus den übrigen Feststoffen abgeschieden, indem sie infolge der Magnetwirkung von dem Elektromagneten 12 angehoben und damit aus dem Austragsmaterial herausgehoben werden, wie dies in Figur 1 durch die Elemente 5.1 angedeutet ist.

Dem Elektromagneten 12 ist eine erste Fördereinheit in Form einer Rutsche 13 fest zugeordnet. Die Rutsche 13 ist unterhalb des Elektromagneten 12 angeordnet und dient als Teil einer Abfuhreinrichtung zum Wegführen der magnetischen Bestandteile 5.1, sobald diese von dem Elektromagneten 12 freigegeben werden und infolge der Schwerkraft auf die Rutsche 13 fallen. Das Freigeben der magnetischen Bestandteile erfolgt dadurch, dass die Steuereinrichtung 11 die Magnetwirkung des Elektromagneten 12 abschaltet.

Das Vorbeiführen des Austragsmaterials 5 an dem Elektromagneten 12 erfolgt durch eine zweite Fördereinheit 14 mit einem kreisscheibenförmigen Förderelement 15, welches auf einer durch einen Antrieb 16 angetriebenen Welle 17 sitzt. Die Achse 17.1 der Welle 17 verläuft dabei senkrecht zur Ebene des Förderelements 15. Das Austragsmaterial 5 fällt dabei zunächst durch die Öffnung 9 auf das Förderelement 15 und wird dann infolge der Drehung des Förderelements 15 um die Achse 17.1 an dem Elektromagneten 12 vorbeigeführt.

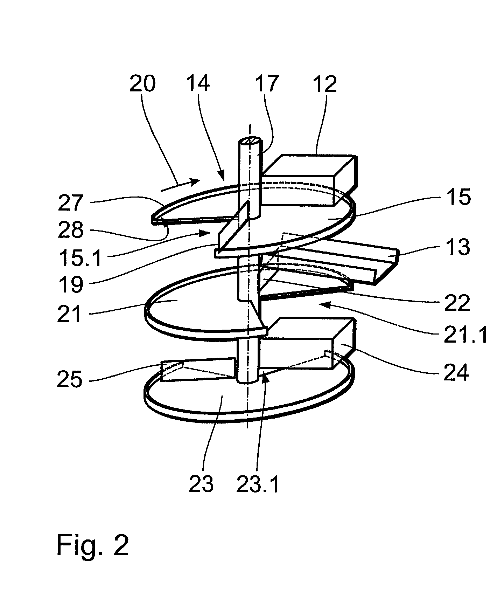

Wie insbesondere Figur 2 zu entnehmen ist, die eine perspektivische Ansicht eines Teils der Vorrichtung aus Figur 1 zeigt, weist das Förderelement 15 der zweiten Fördereinheit 14 eine viertelkreisförmige Ausnehmung 15.1 auf. Sobald sich diese Ausnehmung 15.1 infolge der Drehung des Förderelements 15 unterhalb des Elektromagneten 12 befindet, ist der Weg für die an dem Elektromagneten 12 infolge der Magnetwirkung anhaftenden magnetischen Bestandteile 5.1 zur Rutsche 13 freigegeben. Die Steuereinrichtung 11 schaltet bei dieser Konstellation die Magnetwirkung des Magneten 12 ab, sodass die magnetischen Bestandteile 5.1 freigegeben werden und durch die eine Durchlasseinrichtung bildende Ausnehmung 15.1 auf die Rutsche 13 fallen.

Die Steuereinrichtung 11 steuert nicht nur den Elektromagneten 12, sondern über entsprechende Verbindungen auch den Antrieb 16 sowie die Fördermittel 7, sodass eine einfache Synchronisation zwischen diesen Funktionsgruppen der Vorrichtung möglich ist. Die Synchronisation erfolgt dabei unter zwei Gesichtspunkten. Zum einen erfolgt keine Zufuhr von Austragsmaterial 5 zum Separator 10, wenn die Ausnehmung 15.1 unterhalb der Öffnung 9 angeordnet ist, sodass sichergestellt ist, dass das dem Separator 10 zugeführte Austragsmaterial 5 auch an dem Elektromagneten 12 vorbeigeführt wird. Zum anderen erfolgt das Abschalten des Elektromagneten 12 wie oben geschildert wird dann, wenn die Ausnehmung 15.1 unterhalb des Elektromagneten 12 angeordnet ist, sodass sichergestellt ist, dass die magnetischen Bestandteile 5.1 zuverlässig von dem restlichen Austragsmaterial getrennt werden.

Es versteht sich, dass bei anderen Varianten der Erfindung auch gesonderte Steuereinrichtungen für Antriebe und Elektromagneten vorgesehen sein können, die dann zur Synchronisation miteinander verbunden sein müssen.

Um zu verhindern, dass sich mit der Zeit eine permanente Magnetisierung von Bestandteilen des Elektromagneten 12 oder angrenzender Bauteile des Separators 10 einstellt, ist die Steuereinrichtung 11 so ausgebildet, dass sie den Elektromagneten 12 von Zeit zu Zeit entmagnetisiert. Hierzu beaufschlagt sie den Elektromagneten 12 mit entsprechenden Wechselstromsequenzen. So ist sichergestellt, dass die von dem Elektromagneten 12 angezogenen magnetischen Bestandteile 5.1 auch tatsächlich beim Abschalten der Magnetwirkung freigegeben werden.

Die Rutsche 13 ist so angeordnet, dass die auf sie auftreffenden magnetischen Bestandteile 5.1 in eine unter dem Ende der Rutsche 13 angeordnete erste Schleuse 18 des Separators 10 fallen, über welche sie abgeführt werden.

Um das nach dem Vorbeiführen an dem Elektromagneten 12 auf dem Förderelement 15 verbleibende restliche Austragsmaterial von diesem Förderelement 15 zu entfernen ist dem Förderelement 15 ein fest mit dem Gehäuse 10.1 des Separators 10 verbundener erster Abstreifer 19 zugeordnet.

Dieser Abstreifer 19 bewirkt, dass das restliche Austragsmaterial infolge der Drehung des Förderelements 15 in Richtung des in Figur 2 dargestellten Pfeils 20 auf die nächste Ebene der mehrstufig ausgebildeten Fördereinheit 14 fällt. Diese nächste Ebene ist dabei von einem zweiten kreisscheibenförmigen Förderelement 21 mit einer viertelkreisförmigen Ausnehmung 21.1 gebildet, welches unterhalb des ersten Förderelements 15 ebenfalls auf der Welle 17 angeordnet ist.

Die Ausnehmung 21.1 des zweiten Förderelements 21 ist gegenüber der Ausnehmung 15.1 des ersten Förderelements 15 in Umfangsrichtung derart versetzt, dass sichergestellt ist, dass das von dem ersten Förderelement 15 herabfallende Austragsmaterial auf dem zweiten Förderelement 21 landet und nicht unmittelbar durch die Ausnehmung 21.1 hindurch fällt. Im gezeigten Beispiel ist dies durch eine Verdrehung um 120° gewährleistet.

Es versteht sich jedoch, dass bei anderen Varianten der Erfindung auch andere Verdrehungswinkel gewählt sein können.

Von diesem zweiten Förderelement 21 wird das Austragsmaterial durch einen zweiten Abstreifer 22 infolge der Drehung des Förderelements 21 in Richtung des in Figur 2 dargestellten Pfeils 20 auf eine weitere Ebene der Fördereinheit 14 befördert. Diese nächste Ebene ist von einem dritten kreisscheibenförmigen Förderelement 23 mit einer viertelkreisförmigen Ausnehmung 23.1 gebildet, welches unterhalb des zweiten Förderelements 21 ebenfalls auf der Welle 17 angeordnet ist.

Die Ausnehmung 23.1 des dritten Förderelements 23 ist gegenüber der Ausnehmung 21.1 des zweiten Förderelements 21 in Umfangsrichtung derart versetzt, dass sichergestellt ist, dass das von dem zweiten Förderelement 21 herabfallende Austragsmaterial auf dem dritten Förderelement 23 landet und nicht unmittelbar durch die Ausnehmung 23.1 hindurch fällt. Im gezeigten Beispiel ist dies durch eine Verdrehung um 120° gewährleistet. Es versteht sich jedoch, dass bei anderen Varianten der Erfindung auch andere Verdrehungswinkel gewählt sein können.

Das Herabfallen des Austragsmaterials von dem ersten Förderelement 15 auf das zweite Förderelement 21 und von dem zweiten Förderelement 21 auf das dritte Förderelement 23 bewirken, dass magnetische Bestandteile 5.1, die beim Vorbeiführen an dem ersten Elektromagneten 12 auf Grund irgendwelcher Hindernisse nicht aus dem restlichen Austragsmaterial herausgehoben wurden, sich von diesen Hindernissen lösen bzw. diese Hindernisse beseitigt werden.

Um eine mehrstufige Abscheidung zu erzielen ist über dem dritten Förderelement 23 ein zweiter Elektromagnet 24 angeordnet, der ebenfalls von der Steuereinrichtung 11 angesteuert wird. Das dritte Förderelement 23 führt das Austragsmaterial 5 an dem zweiten Elektromagneten 24 vorbei, sodass ein möglichst großer Anteil der soeben genannten noch im Austragsmaterial verbliebenen restlichen magnetischen Bestandteile 5.1 durch die Magnetwirkung des zweiten Elektromagneten 24 aus dem Austragsmaterial herausgehoben wird.

Sobald sich die Ausnehmung 23.1 infolge der Drehung des Förderelements 23 unterhalb des Elektromagneten 24 befindet, ist der Weg für die an dem Elektromagneten 24 infolge der Magnetwirkung anhaftenden magnetischen Bestandteile 5.1 zur darunter angeordneten erste Schleuse 18 freigegeben. Die Steuereinrichtung 11 schaltet bei dieser Konstellation die Magnetwirkung des Magneten 24 ab, sodass die magnetischen Bestandteile 5.1 freigegeben werden und durch die eine Durchlasseinrichtung bildende Ausnehmung 23.1 in die Schleuse 18 fallen.

Im vorstehenden Beispiel erfolgt eine zweistufige Abscheidung magnetischer Bestandteile. Es versteht sich jedoch, dass bei anderen Varianten der Erfindung noch weitere Abscheidungsstufen vorgesehen sein können. Ebenso versteht es sich, dass gegebenenfalls natürlich auch nur eine einzige Abscheidungsstufe ausreichen kann.

Ein dem dritten Förderelement 23 zugeordneter dritter Abstreifer 25 sorgt dafür, dass das nach der Abscheidung der magnetischen Bestandteile noch verbleibende Austragsmaterial in eine zweite Schleuse 26 fällt, über die es aus dem Separator 10 abgeführt wird.

Mit dem vorstehend beschriebenen Separator 10 ist es auf einfache Weise möglich, magnetische Bestandteile des Austragsmaterialstromes möglichst früh, nämlich noch im Hochtemperaturbereich 3 des Reaktors 2 abzuscheiden und so einen einfachen Abtransport der unterschiedlichen Materialien zu gewährleisten.

Der Separator 10 ermöglicht es, magnetische Bestandteile der Abfallstoffe, wie beispielsweise die Stahlarmierungen von Altreifen, welche in der Regel den Großteil der zum Blockieren bzw. Verstopfen der Abfuhrwege und - einrichtungen neigenden Bestandteile der Abfallstoffe darstellen, sehr früh von den übrigen festen Reaktionsprodukten zu trennen. Dadurch ist nicht nur ein reibungsloserer Betrieb möglich, sondern es können zudem die einzelnen Abfuhreinrichtungen, insbesondere die Schleusen 18 und 26, für die magnetischen Bestandteile 5.1 und die übrigen festen Reaktionsprodukte speziell auf das jeweils abzuführende Gut ausgelegt werden. Wegen der stark unterschiedlichen Beschaffenheit der magnetischen Bestandteile und der übrigen festen Reaktionsprodukte kann die jeweilige Abfuhreinrichtung demgemäss entsprechend einfacher gestaltet sein, da sie nur zum Abführen eines Gutes mit relativ einheitlicher Konsistenz ausgelegt sein muss.

Anders als bei der Abscheidung durch Rüttelsiebeinrichtungen oder dergleichen ermöglicht der Einsatz der Elektromagneteinrichtungen 12 und 24 eine Abscheidung der magnetischen Bestandteile 5.1, ohne dass es zu starken Bewegungen der abgeschiedenen magnetischen Bestandteile 5.1 kommt, wodurch sich diese wiederum nicht untereinander verhaken beziehungsweise verknäueln können. Zudem sind die Elektromagneteinrichtungen 12 bzw. 24 einfach so gestaltet, dass es zu keinem Verhaken der magnetischen Bestandteile 5.1 an der betreffenden Elektromagneteinrichtung 12 bzw. 24 kommt.

Wie insbesondere Figur 1 zu entnehmen ist, weisen die Förderelemente 15, 21 und 23 jeweils einen zur Achse 17 geneigten Verlauf sowie einen umlaufenden Randsteg 27 auf, wodurch sich an ihrem Rand ein rinnenartig ausgebildeter Abschnitt 28 ergibt. Infolge der Neigung der Förderelemente sammeln sich in diesem rinnenartig ausgebildeten Abschnitt 28 - unter Verdrängung von Stoffen geringerer Dichte - mit dem Austragsmaterial 5 aus dem Depolymerisationsbad 4 ausgetragenes Depolymerisationsbadmaterial.

Dieses Depolymerisationsbadmaterial läuft an den Enden des rinnenartigen Abschnitts 28 im Bereich der Ausnehmung 15.1 des ersten Förderelements 15 auf das darunter liegende zweite Förderelement 21. Dort sammelt es sich wiederum in dessen rinnenartigen Abschnitt 28 und läuft an den Enden dieses rinnenartigen Abschnitts 28 im Bereich der Ausnehmung 21.1 des zweiten Förderelements 21 auf das darunter liegende dritte Förderelement 23. Dort sammelt es sich wiederum in dessen rinnenartigen Abschnitt 28 und läuft schließlich an den Enden dieses rinnenartigen Abschnitts 28 im Bereich der Ausnehmung 23.1 des dritten Förderelements 21 in eine darunter liegende ringförmige Rinne 29 mit einem Abfluss 29.1.

Über diesen Abfluss 29.1 gelangt das Depolymerisationsbadmaterial in den Einlass 30.1 einer Badrückführungseinrichtung 30 mit einem Rückführungselement in Form eines Überlaufs 30.2, einen Sammelbehälter 30.3 und einer Pumpeinrichtung 30.4 zum Rückführen des Badmaterials vom Sammelbehälter 30.3 in das Depolymerisationsbad 4.

Um sicherzustellen, dass sich mit dem Austragsmaterial 5 mitgeführte Tropfen des Badmaterials von dem übrigen Austragsmaterial lösen, mit anderen Worten von diesem abgeschüttelt werden, wird das Austragsmaterial einer entsprechenden Verzögerung unterworfen. Dies wird durch die ausreichend groß gewählte Fallhöhe des Austragsmaterials auf das jeweilige Förderelement 15, 21 bzw. 23 erzielt.

Um die Fließfähigkeit des Badmaterials zu erhalten sind in dem Separator 10 Heizelemente 31 vorgesehen, welche den Separator 10 auf einer ausreichenden Temperatur halten.

Der Überlauf 30.2 ist so angeordnet, dass die Oberfläche des Badmaterials im Bereich des Einlasses 30.1 mit dem Boden des Separators 10 abschließt. Hierdurch ist gewährleistet, dass in diesen Bereich gelangendes Austragsmaterial nicht in die Badrückführungseinrichtung 30 gelangt, sondern auf Grund der geringeren Dichte in dem Separator 10 verbleibt und von Zeit zu Zeit durch eine entsprechende - nicht dargestellte - Einrichtung, beispielsweise einen Abstreifer oder dergleichen, in die zweite Schleuse 26 befördert werden kann.

Es versteht sich, dass bei anderen Varianten auch keine solche Einrichtung vorgesehen sein kann, d. h. mit anderen Worten die Ansammlung von Austragsmaterial auf der Oberfläche 32 zugelassen wird. Hat sich dort nämlich eine gewisse Menge Austragsmaterial angesammelt, rutscht weiteres in diesen Bereich gelangendes Austragsmaterial von selbst in die benachbarte dafür vorgesehene zweite Schleuse.

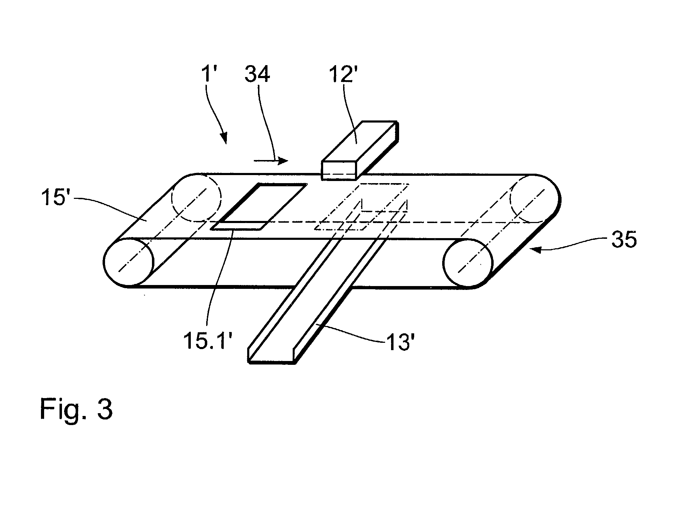

Figur 3 zeigt eine schematische perspektivische Ansicht eines Teils einer bevorzugten Variante der erfindungsgemäßen Vorrichtung 1', die sich in ihrer grundsätzlichen Funktion nicht von der Variante aus den Figuren 1 und 2 unterscheidet, sodass hier lediglich auf die Unterschiede eingegangen werden soll.

Der Unterschied besteht darin, dass die zweite Fördereinheit von einem Förderband 15' gebildet ist, welches unterhalb des ersten Elektromagneten 12' angeordnet ist. Das Förderband 15' transportiert das Austragsmaterial in Richtung des Pfeils 34 an dem Elektromagneten 12' vorbei, wobei dann in der oben beschriebenen Weise die magnetischen Bestandteile von dem Elektromagneten 12' angezogen und dadurch aus dem Austragsmaterial herausgehoben werden.

Unterhalb des Elektromagneten 12' ist zwischen den beiden Trumen des Förderbandes 15' eine Rutsche 13' angeordnet, die zum Wegführen der bei abgeschalteter Magnetwirkung von dem Elektromagneten 12' freigegebenen magnetischen Bestandteile zu einer - nicht dargestellten - ersten Abfuhrschleuse dient. Um den Weg für die magnetischen Bestandteile vom Elektromagneten 12' zur Rutsche 13' freizugeben, weist das Förderband 15' eine Ausnehmung 15.1' auf.

Sobald sich diese Ausnehmung 15.1' unterhalb des Elektromagneten 12' befindet, wird die Magnetwirkung durch die - nicht dargestellte - Steuereinrichtung abgeschaltet. Die Steuereinrichtung steuert dabei auch den Antrieb des Förderbandes 15', sodass eine entsprechende Synchronisation möglich ist.

Der nach der Abscheidung der magnetischen Bestandteile verbleibende Anteil des Austragsmaterials fällt am Ende 35 des Förderbandes 15' in eine darunter liegende - nicht dargestellte - zweite Abfuhrschleuse. Es versteht sich, dass bei anderen Varianten der Erfindung zur mehrfachen Abscheidung ein weiteres Förderband mit zugeordnetem Elektromagneten und zugeordneter Rutsche vorgesehen sein kann, auf welches das Austragsmaterial von Ende 35 des Förderbandes 15' fällt. Ebenso versteht es sich, dass noch weitere Abscheidungsstufen in Form solcher Einrichtungen vorgesehen sein können.

## Patentansprüche

1. Vorrichtung zur Aufbereitung von hochtemperaturbeständige Bestandteile (5.1), insbesondere hochtemperaturbeständige Metallteile, enthaltenden organischen Abfallstoffen mit einem einen Hochtemperaturbereich (3) umfassenden Reaktor (2), einem darin angeordneten Depolymerisationsbad (4) zur thermischen Depolymerisation der organischen Bestandteile der Abfallstoffe und mit einer im Hochtemperaturbereich (3) des Reaktors (2) angeordneten Abscheidungseinrichtung (10) zur Abscheidung wenigstens eines Teils der hochtemperaturbeständigen Bestandteile (5.1) aus dem Austragsmaterialstrom (5) des Depolymerisationsbades (4), **dadurch gekennzeichnet, dass** die Abscheidungseinrichtung (10) eine erste Magneteinrichtung (11, 12; 12') zur Abscheidung magnetischer Bestandteile (5.1) umfasst.

2. Vorrichtung nach Anspruch 1, **dadurch gekennzeichnet, dass** die erste Magneteinrichtung als Elektromagneteinrichtung (11, 12; 12') ausgebildet ist.

3. Vorrichtung nach Anspruch 2, **dadurch gekennzeichnet, dass** die erste Elektromagneteinrichtung (11, 12; 12') eine zum zeitweisen Abschalten der Magnetwirkung ausgebildete Steuereinrichtung (11) umfasst und die Abscheidungseinrichtung (10) eine der ersten Elektromagneteinrichtung (11, 12; 12') zumindest zeitweise zugeordnete Abfuhreinrichtung (13; 13') zum Wegführen der von der ersten Elektromagneteinrichtung (11, 12; 12') bei abgeschalteter Magnetwirkung freigegebenen magnetischen Bestandteile (5.1) aufweist.

4. Vorrichtung nach Anspruch 3, **dadurch gekennzeichnet, dass** die Steuereinrichtung (11) zum zeitweisen Entmagnetisieren der ersten Elektromagneteinrichtung (11, 12; 12') ausgebildet ist.

5. Vorrichtung nach einem der Ansprüche 2 bis 4, **dadurch gekennzeichnet, dass** die erste Elektromagneteinrichtung (11, 12; 12') eine Elektromagneteinheit (12; 12') umfasst und die Abfuhreinrichtung (13; 13') eine zumindest zeitweise unterhalb der Elektromagneteinheit angeordnete erste Fördereinheit (13; 13') zum Wegführen der von der ersten Elektromagneteinrichtung (11, 12; 12') bei abgeschalteter Magnetwirkung freigegebenen magnetischen Bestandteile (5.1) umfasst.

6. Vorrichtung nach Anspruch 5, **dadurch gekennzeichnet, dass** die erste Fördereinheit eine Rutsche (13; 13') umfasst.

7. Vorrichtung nach einem der Ansprüche 2 bis 6, **dadurch gekennzeichnet, dass** die Abscheidungseinrichtung (10) eine der ersten Elektromagneteinrichtung (11, 12; 12') zugeordnete zweite Fördereinheit (16, 17, 15; 15') zum Vorbeiführen des Austragsmaterials (5) an der ersten Elektromagneteinrichtung (11, 12; 12') umfasst, wobei die zweite Fördereinheit (16, 17, 15; 15') zum Wegführen der von der ersten Elektromagneteinrichtung (11, 12; 12') bei abgeschalteter Magnetwirkung freigegebenen magnetischen Bestandteile (5.1) wenigstens eine der ersten Elektromagneteinrichtung (11, 12; 12') zeitweise zugeordnete Durchlasseinrichtung (15.1; 15.1') aufweist.

8. Vorrichtung nach Anspruch 7, **dadurch gekennzeichnet, dass** die zweite Fördereinheit (16, 17, 15; 15') ein scheibenförmiges, um eine im wesentlichen senkrecht zu seiner Ebene verlaufende Achse (17) drehbares Förderelement (15) mit einer Durchlasseinrichtung in Form einer Ausnehmung (15.1) umfasst.

9. Vorrichtung nach Anspruch 8, **dadurch gekennzeichnet, dass** das Förderelement (15) kreisscheibenförmig mit einer im wesentlichen kreissektorförmigen Durchlassöffnung (15.1) ausgebildet ist.

10. Vorrichtung nach einem der vorhergehenden Ansprüche, **dadurch gekennzeichnet, dass** die Abscheidungseinrichtung (10) eine der ersten Magneteinrichtung (11, 12; 12') zugeordnete zweite Fördereinheit (16, 17, 15; 15') zum Vorbeiführen des Austragsmaterials an der ersten Magneteinrichtung (11, 12; 12') aufweist und eine Zufuhreinrichtung (7) zum Zuführen des Austragsmaterials vom Depolymerisationsbad (4) vorgesehen ist, welche der zweiten Fördereinheit (16, 17, 15; 15') derart zugeordnet ist, dass eine ausreichende Fallhöhe zum Abschütteln an dem Austragsmaterial (5), insbesondere an den magnetischen Bestandteilen (5.1), anhaftender Tropfen oder Partikel des Depolymerisationsbades (4) bei Auftreffen des Austragsmaterials (5) auf die zweite Fördereinheit (16, 17, 15; 15') gegeben ist.

11. Vorrichtung nach Anspruch 10, **dadurch gekennzeichnet, dass** die zweite Fördereinheit (16, 17, 15) zum Abführen mit dem Austragsmaterial mitgeführter Tropfen oder Partikel des Depolymerisationsbades (4) ausgebildet ist.

12. Vorrichtung nach Anspruch 11, **dadurch gekennzeichnet, dass** die zweite Fördereinheit (16, 17, 15) einen rinnenartig ausgebildeten Abschnitt (28) zum Abführen mit dem Austragsmaterial (5) mitgeführter Tropfen oder Partikel des Depolymerisationsbades (4) aufweist.

13. Vorrichtung nach einem der vorhergehenden Ansprüche, **dadurch gekennzeichnet, dass** der Abscheidungseinrichtung (10) eine Badrückführungseinrichtung (30) zum Rückführen mit dem Austragsmaterialstrom (5) mitgeführter Tropfen oder Partikel des Depolymerisationsbades (4) zugeordnet ist.

14. Vorrichtung nach Anspruch 13, **dadurch gekennzeichnet, dass** die Badrückführungseinrichtung (30) einen nach Art eines Überlaufs ausgebildetes Rückführungselement (30.2) umfasst.

15. Vorrichtung nach einem der vorhergehenden Ansprüche, **dadurch gekennzeichnet, dass** sie zur mehrstufigen Abscheidung magnetischer Bestandteile (5.1) ausgebildet ist.

16. Abscheidungseinrichtung für eine Vorrichtung nach einem der vorhergehenden Ansprüche.

17. Verfahren zur Aufbereitung von hochtemperaturbeständige Bestandteile (5.1), insbesondere hochtemperaturbeständige Metallteile, enthaltenden organischen Abfallstoffen, bei dem in einem Depolymerisationsbad (4) eines Reaktors (2) eine thermische Depolymerisation der organischen Bestandteile der Abfallstoffe erfolgt und im Hochtemperaturbereich (3) des Reaktors (2) wenigstens ein Teil der hochtemperaturbeständigen Bestandteile aus dem Austragsmaterialstrom (5) des Depolymerisationsbades (4) abgeschieden wird, **dadurch gekennzeichnet, dass** eine frühzeitige Abscheidung magnetischer Bestandteile (5.1) im Hochtemperaturbereich (3) des Reaktors (2) durch Magnetwirkung einer Magneteinrichtung (11, 12; 12') erfolgt.

18. Verfahren nach Anspruch 17, **dadurch gekennzeichnet, dass** die Magnetwirkung zeitweise abgeschaltet wird, um die bei abgeschalteter Magnetwirkung von der Magneteinrichtung (11, 12; 12') freigegebenen magnetischen Bestandteile (5.1) abzuführen.

19. Verfahren nach Anspruch 17 oder 18, **dadurch gekennzeichnet, dass** das Austragsmaterial (5) zur Abscheidung der magnetischen Bestandteile (5.1) an der Magneteinrichtung (11, 12; 12') vorbeigeführt wird.

20. Verfahren nach einem der Ansprüche 17 bis 19, **dadurch gekennzeichnet, dass** mit dem Austragsmaterial (5) mitgeführte Tropfen oder Partikel des Depolymerisationsbades (4) im Hochtemperaturbereich (3) des Reaktors (2) von dem Austragsmaterial (5) abgeschieden und in das Depolymerisationsbad (4) zurückgeführt werden.

21. Verfahren nach einem der Ansprüche 17 bis 20, **dadurch gekennzeichnet, dass** zum Abschütteln an dem Austragsmaterial (5), insbesondere an den magnetischen Bestandteilen (5.1), anhaftender Tropfen oder Partikel des Depolymerisationsbades (4) das bewegte Austragsmaterial (5) im Hochtemperaturbereich (3) des Reaktors (2) einer zum Abschütteln zumindest eines Großteils der anhaftenden Tropfen oder Partikel ausreichenden Verzögerung unterworfen wird.
